# EUROPEAN PATENT APPLICATION

(11) **EP 4 703 081 A1**
(43) Date of publication of application: **04.03.2026**
(21) Application number: 25198847.3
(22) Date of filing: 28.08.2025
(51) Int. Cl.: B23Q 1/26, B23Q 1/32, B23Q 3/10

(54) **CLAMPING DEVICE**

(30) Priority: 03.09.2024 IT 202400019639
(71) Applicant: FCS System Srl, 31032 Casale sul Sile (TV) (IT)
(72) Inventor: CALZAVARA, Andrea, 31057 Silea (TV) (IT); TREVISIOL, Nico, 31052 Maserada sul Piave (TV) (IT)
(74) Representative: Caldon, Giuliano

(57) **Abstract**

Clamping device (1) for holding a semifinished product in position with respect to a support base comprising at least a first connection body (3) and a second connection body (5) mechanically engaged to mutually translate one with respect to the other with at least one degree of freedom on a reference plane (X) between a plurality of first adjustment positions. Such a clamping device (1) further comprises first locking means (6), which can be switched between a first constraint condition, in which they lock the first and second connection body (3, 5) in one of the first adjustment positions, and a first release condition, in which they free the first and second connection body (3, 5) to mutually translate one with respect to the other on the reference plane (X). Furthermore, the clamping device (1) comprises a first actuation piston (7), which is slidably inserted into a first guide chamber (8) obtained on the first connection body (3) in order to translate along a movement direction (Z) transversal to the reference plane (X) between a first and a second actuation position, in which it maintains the first locking means (6) in the first constraint condition and in the first release condition, respectively. The clamping device (1) further comprises first elastic means (9), which are inserted into the first guide chamber (8) and are provided to force the first actuation piston (7) into one of the first and second actuation positions, and first actuator means (10), which are provided to move the first actuation piston (7) into the other of the first and second actuation position, making the first elastic means (9) yield elastically.

## Description

### Field of application

The present invention concerns a clamping device for holding a semifinished product in position with respect to a support base, according to the preamble of independent claim number 1.

In particular, the clamping device in question is advantageously used in the mechanical industry to hold bodies in position intended to be subjected to various machining operations.

More in particular, the clamping device which is the subject of the present invention can be advantageously used to hold in position, with respect to the support base, in particular of a machine tool (for example of the CNC type), a body to be machined, which is advantageously made of metallic material, or of composite material, or of any other material.

The invention therefore fits in the context of the industrial sector of precision mechanics.

### State of the art

In the sector of machining mechanical components through turning, milling, drilling, etc. operations, the need is particularly felt to stably retain the semifinished products to be machined.

For this purpose, the known clamping devices are generally fixed to a support base, usually coupled to or forming part of a machine tool for machining semifinished products. In particular, the known support bases are provided with a plurality of seats, in particular threaded, for fixing the clamping device itself, which fixing seats are distributed along a matrix of points to determine a plurality of pre-established work positions in which the clamping device can be arranged to support the semifinished product, available for the machine tool.

In more detail, the known type of clamping devices are generally fixed, on one side, to the support base and, on the other side, to the semifinished product to be retained, and in particular they are interposed therebetween.

In order to be fixed to the semifinished product and to the support base, the known type of clamping devices are generally provided with fixing means comprising tie rods, which tie rods in particular consist of a first threaded rod screwed to the semifinished product and a second threaded rod screwed to the support base. The two threaded rods of the fixing means are also partially inserted inside corresponding housing seats obtained in the central body of the clamping device and are locked to the latter by anchoring means, usually comprising a pair of jaws adapted to act on each threaded rod.

In more detail, the clamping occurs in a stable manner since the jaws of the anchoring means and the portion of the threaded rods intended to be interposed between the aforesaid jaws are shaped so that, when the jaws are closed, the latter exert forces which, unloading through the threaded rods, on one side, press the central body of the clamping device against the support base and, on the other side, press the aforesaid central body against the semifinished product.

However, the known types of semifinished product clamping devices briefly described above have proven to be not free from drawbacks in practice.

A major drawback of the known clamping devices is the inability to precisely adjust the position in which such clamping devices are connected to the semifinished product to be held in position.

In fact, to retain a semifinished product on the base, it is necessary to use a set composed of several clamping devices, all of which are provided with a main body having a substantially cylindrical shape that extends between two bases parallel to each other, one of which is intended to be arranged against the support base and one intended to be arranged against the semifinished product, and furthermore on these bases the housing seats (for the threaded rods of the tie rods) are obtained, aligned with each other.

However, it is clear that the distribution of the holes obtained on the semifinished product and the distribution of the holes obtained on the support base for the insertion of the threaded rods of tie rods may not coincide exactly due to not very precise dimensional tolerances.

Consequently, when a set of clamping devices according to the prior art is used to hold a semifinished product in position (in which set all the clamping devices have the same shape and dimensions) and the threaded rods of each device are clamped by means of the jaws of the anchoring means, tensile or compressive stresses are generated at least in the area adjacent to the threaded seats engaged by the rods. These stresses are greater the greater the difference in the distribution of the holes on the support base and on the semifinished product and could affect the quality of the machining executed on the semifinished product.

A further drawback of the known clamping devices lies in their inability to adapt to semifinished products provided with irregular shapes, for example those with external surfaces which, once the semifinished product is constrained to the support base, are tilted with respect to the support base itself or which are non-planar.

### Presentation of the invention

In this situation, the problem underlying the present invention is therefore to overcome the drawbacks of the prior art by providing a clamping device for holding a semifinished product in position with respect to a support base, which allows it to adapt to the particular position of the semifinished product with respect to the support base on a plane parallel to the support base itself.

A further object of the present invention is to provide a clamping device which prevents the onset of unwanted tensile and compressive stresses on the semifinished product to be fixed to the support base.

A further object of the present invention is to provide a clamping device which allows eliminating any unwanted tensile and compressive stresses which may have developed in the semifinished product during the mechanical machining steps to which the semifinished product itself has been subjected.

A further object of the present invention is to provide a clamping device is operationally wholly reliable.

A further object of the present invention is to provide a clamping device which is simple and economical to manufacture and use.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:

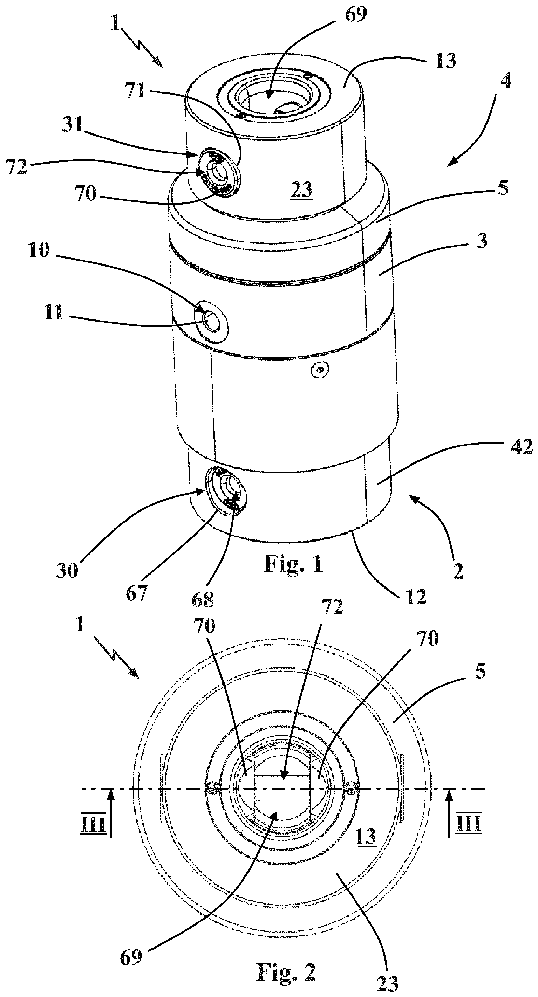

- Fig. 1 shows a perspective view of a clamping device which is the subject of the present invention in accordance with a preferred embodiment;
- Fig. 2 shows a top plan view of the clamping device of Figure 1;

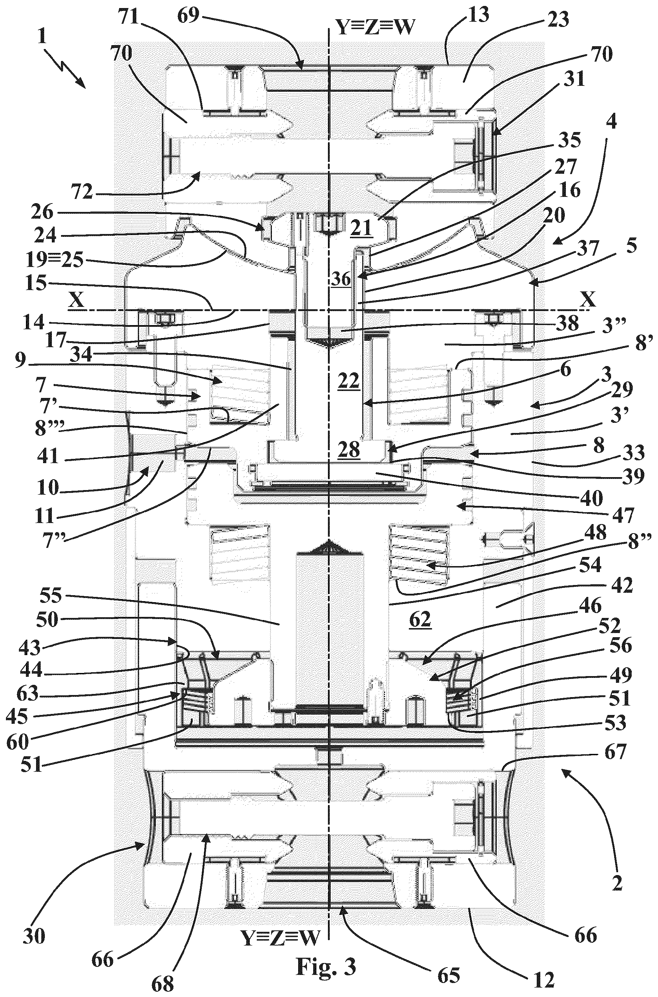

- Fig. 3 shows a side sectional view of the clamping device of Figure 1, which section is obtained along the line III-III of Figure 2;
- Fig. 4 shows a perspective side sectional view of a first component of a first connection body of a first clamping assembly of the clamping device of Figure 1, which section is obtained along the same line III-III of Figure 2;
- Figure 5 shows a perspective view of a second cup spring of fourth elastic means of the clamping device of Figure 1.

### Detailed description of a preferred embodiment

With reference to the attached drawings, the reference numeral 1 indicates as a whole a clamping device, according to the present invention.

Such a clamping device 1 is advantageously intended to be used to hold a semifinished product in position with respect to a support base, and in particular it is intended to keep the semifinished product itself at a pre-established position available for the machining operations to which it is intended to be subjected.

In more detail, the support base can belong to an operating machine, such as a CNC operating machine, provided to subject the semifinished product to machining operations, such as chip removal processes (milling, surface finishing treatments, drilling, etc.).

Alternatively, the support base can be a separate component with respect to the operating machine, which component is intended to be installed adjacent to the latter and is provided to maintain, through the clamping assembly 1 which is the subject of the present invention, the semifinished product in position with respect to a tool device of the aforesaid operating machine.

According to the invention, the clamping device 1 comprises at least one first clamping assembly 2, which is intended to be removably fixed to one of the support base and the semifinished product and comprises at least one first connection body 3.

In more detail, the first clamping assembly 2 is advantageously provided with first coupling means 30 provided to removably fix the aforesaid first clamping assembly 2 to the support base or to the semifinished product.

Preferably, in order to be able to removably fix the first clamping assembly 2, the first coupling means 30 are threaded.

In fact, traditionally, the semifinished product is provided with first threaded holes corresponding to the points where it must be clamped to the support base and the support base is provided with a plurality of second threaded holes distributed along a regular matrix of points, so as to be able to select the second hole in the most suitable position in which to clamp the semifinished product to the support base by means of the clamping device 1.

Furthermore, the clamping device 1 in question comprises at least a second clamping assembly 4, which is intended to be removably fixed to the other of the semifinished product and the support base and comprises at least a second connection body 5.

Such first and second connection body 3, 5 are mechanically engaged to mutually translate one with respect to the other with at least one degree of freedom on a reference plane X between a plurality of first adjustment positions.

Advantageously, in accordance with the preferred embodiment illustrated in the attached figures, the first and second connection body 3, 5 are mechanically engaged to mutually translate one with respect to the other with two degrees of freedom on the reference plane X between a plurality of first adjustment positions.

In particular, with the expression "mutually translate one with respect to the other with two degrees of freedom on a reference plane X" it should be understood in the following that the first and second connection body 3, 5 can translate one with respect to the other in a plurality of first adjustment positions identifiable by referring to two Cartesian axes orthogonal to each other and belonging to the aforesaid reference plane X.

In more detail, the second clamping assembly 4 is advantageously provided with second coupling means 31 provided to removably fix the aforesaid second clamping assembly 4 to the support base or to the semifinished product, i.e. in particular to the one to which the first clamping assembly 2 is not removably fixed.

Preferably, in order to be able to removably fix the second clamping assembly 4, the second coupling means 31 are threaded.

Furthermore, the clamping device 1 according to the invention comprises first locking means 6, which are mechanically associated with the first and with the second connection body 3, 5 and they can be switched between a first constraint condition, in which they lock the first and second connection body 3, 5 into one of the first adjustment positions, and a first release condition, in which they free the first and second connection body 3, 5 to mutually translate one with respect to the other on the reference plane X.

The clamping device 1 in question further comprises a first actuation piston 7, which is slidably inserted into a first guide chamber 8 obtained on the first connection body 3 in order to translate along a movement direction Z transversal (in particular orthogonal) to the reference plane X between a first actuation position, in which it maintains the first locking means 6 in the first constraint condition, and a second actuation position, in which it maintains the first locking means 6 in the first release condition.

The clamping device 1 in question further comprises first elastic means 9, which are inserted into the first guide chamber 8 and are provided to force the first actuation piston 7 into one of the first actuation position and the second actuation position, and first actuator means 10, which are provided to move the first actuation piston 7 into the other of the first and second actuation position, making the first elastic means 9 yield elastically.

In more detail, the provision of first elastic means 9 in the first guide chamber 8 ensures that the first actuation piston 7 is always maintained in one of the first and second actuation position, so as to maintain the first locking means 6 in the first constraint condition or in the first release condition, respectively, while the provision of first actuator means 10, which can be actuated to make the first elastic means 9 yield elastically, allows moving the actuation piston 7 to the other of the first and second actuation position to switch the first locking means 6, thus locking or releasing as needed the relative translation between the first and second connection body 3, 5 on the reference plane X. Thereby, operationally, when the semifinished product is fixed to the support base by means of multiple clamping devices 1, it is possible to act on the first actuator means 10 (actuating or disabling them depending on whether the first elastic means 9 force the first actuation piston 7 into the first or second actuation position) to ensure that, during a machining operation (for example chip removal, finishing, milling, drilling and the like), the first actuation piston 7 is in the first actuation position and therefore keeps the first locking means 6 in the first constraint condition, with the consequence that during such machining operation the first and second connection body 3, 5 are in a specific first adjustment position and keep the semifinished product precisely in position with respect to the support base.

Furthermore, operationally, when the aforesaid machining operation is finished, always acting on the first actuator means 10, it is possible to move the first actuation piston 7 into the second actuation position to switch the first locking means 6 into the first release condition, so that the first and second connection body 3, 5 can settle in a different first adjustment position on the reference plane X, thus compensating for any tensile and/or compressive stresses that have developed in the semifinished product during the machining operation, for example due to thermal deformations and the like. In fact, for example, the machining operations executed on the semifinished product can induce thermal deformations that lead to misalignment between the point at which the clamping device 1 in question is fixed to the semifinished product and the point at which the same clamping device 1 is fixed to the support base and, advantageously, the first and second connection body 3, 5 which can be translated one with respect to the other on the adjustment plane X (which in use is in particular parallel to the support base) allow the clamping device 1 to adapt to the aforesaid misalignment, reducing or eliminating the tensile and/or compressive stresses that have developed in the semifinished product during the machining operations.

Therefore, advantageously, the switching of the first locking means 6 into the first release condition by means of the first actuation piston 7, which is moved by the first elastic means 9 and the first actuator means 10, ensures that the semifinished product is free from compressive and/or tensile stresses following any machining operation, so that the aforesaid semifinished product can be subjected, after the first locking means 6 are brought back into the first constraint condition, to another subsequent machining operation without any residual compressive and/or tensile stresses being able to affect its quality.

Advantageously, the first clamping assembly 2 is provided with a first support surface 12 intended to be placed against one of the support base and the semifinished product and the second clamping assembly 4 is provided with a second support surface 13 intended to be placed against the other of the support base and the semifinished product.

Preferably, the first and second support surface 12, 13 are tilted or parallel (and therefore not orthogonal) with respect to the reference plane X, so that the one of the first and second connection body 3, 5 which is not fixed to the support base can modify the position of its projection on the support base by translating, in particular with two degrees of freedom, along the aforesaid reference plane X.

In particular, at least one of the first support surface 12 and the second support surface 13 is parallel to the reference plane X.

Thereby, when the clamping device 1 is placed on the support base with that of the first support surface 12 and the second support surface 13 being parallel to the reference plane X, the same reference plane X is oriented so as to be parallel to the same support base, thus allowing the first connection body 3 and the second connection body 5 to translate one with respect to the other parallel to the support base.

Furthermore, preferably, the clamping device 1 extends between the first support surface 12 of the first clamping assembly 2 and the second support surface 13 of the second clamping assembly 4 at least partly along an extension axis Y thereof which is transversal (in particular orthogonal) with respect to the reference plane X.

In order to allow easy production of the device 1 in question, the first connection body 3 advantageously comprises a first component 3' and a second component 3", which are fixed one to the other (for example by means of screws or by welding) and together delimit the first guide chamber 8.

As illustrated in the attached figures, preferably, the first guide chamber 8 extends mainly (in particular only) inside the first component 3' and the second component 3" is fixed to the first component 3' (for example by means of screws or welding) to close the aforesaid first guide chamber 8, so that the first guide chamber 8 is delimited by both the first and second component 3', 3".

Advantageously, the first elastic means 9 are provided to force the first actuation piston 7 into the first actuation position and the first actuator means 10 are provided to move the first actuation piston 7 into the second actuation position by making the first elastic means 9 yield elastically.

Thereby, the first elastic means 9 automatically maintain the first locking means 6 in the first constraint condition, forcing the first actuation piston 7 into the first actuation position, so that the first and second connection body 3, 5 are constantly maintained in a specific first adjustment position throughout the entire machining operations. Furthermore, it is thereby sufficient to act on the first actuator means 10 briefly only at the end of the aforesaid machining operations to switch the first locking means 6 into the first release condition and allow the mutual translation of the first and second connection body 3, 5 on the reference plane X in order to compensate for any compressive and/or tensile stresses that have developed.

Preferably, the first elastic means 9 comprise at least one first cup spring and, even more preferably, a plurality of first cup springs arranged one above the other.

In particular, the use of at least one first cup spring is particularly advantageous with the first elastic means 9 which are provided to force the first actuation piston 7 into the first actuation position. In fact, the first cup springs generally have a higher rigidity than helical springs and therefore, in this case, they are able to keep the first locking means 6 in the first constraint condition more safely, so as to prevent the stresses transmitted to the semifinished product during the machining operations from leading the first and second connection body 3, 5 to be translated between each other, thus modifying the first adjustment position in an undesired manner.

Advantageously, the first actuator means 10 comprise at least a first conveyance duct 11 obtained on the first connection body 3 (in particular on the first component 3' of the latter), placed in fluid communication with the first guide chamber 8 and provided to convey a pressurized fluid against the first actuation piston 7 in order to make the first elastic means 9 yield elastically and push the first actuation piston 7 into the other of the first actuation position and the second actuation position.

In particular, such conformation of the first actuator means 10 with the first conveyance duct 11 makes the clamping device 1 in question particularly simple, since to make the first elastic means 9 yield elastically it is sufficient to connect the aforesaid first conveyance duct 11 to pressurized fluid supply means, which can be for example a compressed air or pressurized oil supply circuit (normally available to any company or workshop operating in the mechanical sector), and to actuate the aforesaid supply means when necessary.

In more detail, the first actuation piston 7 is provided with a first face 7' and an opposite second face 7".

Furthermore, preferably, the first actuation means 9 are arranged in abutment against the aforesaid first face 7' and the first actuator means 10 are provided to make the first elastic means 9 yield elastically by acting on the second face 7".

In particular, the first conveyance duct 11 of the first actuator means 10 is provided to convey the pressurized fluid against the second face 7" in order to make the first elastic means 9 yield elastically.

Preferably, the first guide chamber 8 is delimited by a first end surface 8', which is opposite the first face 7' of the first actuation piston 7, and by an opposite second end surface 8", which is opposite the second face 7" of the first actuation piston 7.

Furthermore, the first guide chamber 8 is preferably also delimited by an internal side surface 8‴, which extends from the first end surface 8' to the second end surface 8" to enclose therewith the first guide chamber 8 itself.

In more detail, the aforesaid first conveyance duct 11 extends between a receiving opening, which is arranged on an external side surface 33 of the first connection body 3, and a conveyance opening, which is placed in fluid connection with the first guide chamber 8, in particular arranged on the internal side surface 8‴ adjacent to the second end surface 8" or obtained at least in part directly on the second end surface 8" (for example, in accordance with embodiments not illustrated in which there are no other actuation pistons and other elastic means inside the first guide chamber 8), or obtained on the side surface 8‴ spaced from both the first and second end surfaces 8', 8" (for example, in accordance with the illustrated embodiment in which, as better described below, another actuation piston and other elastic means are present in the first guide chamber 8).

Advantageously, the first connection body 3 is provided with a first sliding surface 14 and the second connection body 5 is provided with a second sliding surface 15, which first and second sliding surface 14, 15 are susceptible of sliding one with respect to the other with the first and second connection body 3, 5 translating (in particular with two degrees of freedom) on the reference plane X.

In particular, the first sliding surface 14 and the second sliding surface 15 are both substantially planar and are parallel to each other.

In more detail, the first and second sliding surface 14, 15 can slide one with respect to the other directly in contact with each other (in accordance with the preferred embodiment illustrated) or they can slide one with respect to the other with other components of the clamping device 1 in question interposed therebetween (in accordance with embodiment variants not illustrated).

In particular, the first and second sliding surface 14, 15 extend at the reference plane X if they are in direct contact with each other, or are parallel to the reference plane X if one or more other components of the clamping device 1 are interposed therebetween.

In accordance with an embodiment not illustrated, the first and second connection body 3, 5 are mechanically engaged to mutually translate one with respect to the other with a single degree of freedom on a reference plane X between a plurality of first adjustment positions. In other words, the first and second connection body 3, 5 are therefore mechanically engaged to mutually translate one with respect to the other along a sliding direction belonging to the aforesaid reference plane X between a plurality of first adjustment positions. In accordance with this embodiment not illustrated which provides for a single degree of freedom, the clamping device 1 is advantageously provided with guide means provided to connect the first and second connection body 3, 5 in a sliding manner along the aforesaid sliding direction belonging to the reference plane X. In more detail, such guide means comprise at least one rail (possibly more than one rail), which is obtained on one of the first and second connection body 3, 5 and extends along the sliding direction, and at least one slider (possibly more than one slider, of which one for each rail), which is slidably inserted in the aforesaid rail and is mechanically connected (for example fixed to or made in a single body with) to the other of the first and the second connection body 3, 5 on which the rail is not obtained. In particular, the rail of the guide means is obtained in depression on one of the first and second sliding surface 14, 15 and the slider extends projecting from the other of the first and second sliding surface 14, 15 to be slidably inserted in the rail. Preferably, the slider is made with a pin (in particular at least partially threaded), which is partially inserted into a corresponding engagement hole (in particular threaded) obtained on the one of the first and second sliding surface 14, 15 on which the rail is not obtained so as to project at least partially with respect to the aforesaid engagement hole.

Otherwise, in accordance with the preferred embodiment in which the first and second connection body 3, 5 are mechanically engaged to mutually translate one with respect to the other with two degrees of freedom on the reference plane X, no guide means are necessary between the first and second connection body 3, 5.

Furthermore, in accordance with the preferred embodiment, the first and second sliding surface 14, 15 are advantageously placed in contact with each other and, therefore, are preferably susceptible of sliding directly one on the other with the first and second connection body 3, 5 translating with two degrees of freedom on the reference plane X.

Furthermore, the first locking means 6 advantageously comprise a first pulling element 16, which is mechanically associated with the second connection body 5 and is integrally joined with the first actuation piston 7 at least in translation along a movement direction Z transversal (in particular orthogonal) to the reference plane X, to pull under pressure the second sliding surface 15 towards the first sliding surface 14, locking the first and second connection body 3, 5 in a first adjustment position, with the first actuation piston 7 in the first actuation position.

In more detail, the first pulling element 16 is to be considered mechanically associated with the first connection body 3 since it is integrally joined at least in translation along the movement direction Z with the first actuation piston 7 which is inserted in the first guide chamber 8 obtained in the first connection body 3.

Thereby, when the first actuation piston 7 translates along the movement direction Z transversal to the reference plane X to arrange itself in the first actuation position, the first pulling element 16 of the first locking means 6 is in turn pulled along the aforesaid movement direction Z, pulling the second connection body 5 towards the first connection body 3 and locking the latter in a first adjustment position.

In accordance with the preferred embodiment in which the first and second sliding surface 14, 15 are advantageously in direct contact with each other, the first pulling element 16 pulls in abutment under pressure the second sliding surface 15 against the first sliding surface 14, locking the first and second connection body 3, 5 (in particular by friction on the first and second sliding surface 14, 15) in a first adjustment position, with the first actuation piston 7 in the first actuation position. Advantageously, the first and second end surface 8', 8" of the first guide chamber 8 are transversal (preferably orthogonal) to the movement direction Z of the first actuation piston 7.

In accordance with the preferential embodiment which is illustrated in the attached figures and which provides the first pulling element 16, in order to ensure that the first elastic means 9 force the first actuation piston 7 into the first actuation position, the first face 7' of the first actuation piston 7 faces the second connection body 5 and the first elastic means 9 (in particular the at least one first cup spring or a plurality of first cup springs arranged one on top of the other) are interposed between the first end surface 8' and the aforesaid first face 7'.

Thereby, the first elastic means 9 act against the first face 7' of the first actuation piston 7, forcing the aforesaid first actuation piston 7 into the first actuation position away from the first end surface 8', which is opposite the first face 7' facing the second connection body 5, so that the second connection body 5 is pulled by the first pulling element 16 towards the first connection body 3 and locks the mutual translation of the first and second connection body 3, 5 due to the friction that manifests at the first and second sliding surface 14, 15.

Furthermore, the first connection body 3 is advantageously provided with a first communication opening 17 extending between the first guide chamber 8 and the first sliding surface 14.

Preferably, the first communication opening 17 is obtained on the second component 3" of the first connection body 3.

In more detail, the first end surface 8' is obtained around the first communication opening 17 (and, therefore, extends in particular on the second component 3" since the same first communication opening 17 is obtained thereon).

Preferably, the first pulling element 16 is placed to traverse, in particular with play, the first communication opening 17 of the first connection body 3.

In accordance with an embodiment not illustrated in the attached figures, the first pulling element 16 is mechanically connected to the second connection body 5 and to the first actuation piston 7 by means of corresponding spherical joints and, furthermore, the first pulling element 16 is placed to traverse the first communication opening 17 with play, in particular in order to allow the first pulling element 16 to modify the tilt thereof when the first and second connection body 3, 5 translate one with respect to the other (in particular with two degrees of freedom) on the reference plane X in order to change the first adjustment position thereof.

In accordance with the preferred embodiment, the second connection body 5 is advantageously provided with a retention surface 19, which faces the opposite direction with respect to the second sliding surface 15, and with a second communication opening 20 extending between the second sliding surface 15 and the retention surface 19.

In particular, therefore, the retention surface 19 extends, at least in part, around the second communication opening 20, since the aforesaid second communication opening 20 develops between the second sliding surface 15 and the retention surface 19.

Furthermore, the first pulling element 16 is advantageously provided with a widened head 21, which is arranged adjacent to the retention surface 19 and has larger dimensions with respect to those of the second communication opening 20, on a plane transversal (in particular orthogonal) to the movement direction Z.

Furthermore, the first pulling element 16 is advantageously provided with a stem 22, which extends starting from the widened head 21, is mechanically connected to the first actuation piston 7 and is placed to traverse the second communication opening 20 of the second connection body 5.

In more detail, with the first actuation piston 7 in the first actuation position, the widened head 21 is pulled towards the first connection body 3 by the stem 22 mechanically connected to the first actuation piston 7 to push, acting on the retention surface 19 (directly or indirectly through other components interposed between the widened head 21 itself and the retention surface 19), the second connection body 5 under pressure with its second sliding surface 15 towards the first sliding surface 14 of the first connection body 3.

Thereby, when the first actuation piston 7 translates along the movement direction Z transversal to the reference plane X to arrange itself in the first actuation position, switching the first locking means 6 to the first constraint condition, the widened head 21 does not risk traversing the second communication opening 20 (since the dimensions of the widened head 21 itself are larger, on a plane transversal to the movement direction Z, than those of the second communication opening 20) and, furthermore, such widened head 21 (being pulled by the stem 22 towards the first connection body 3 when the first actuation piston 7 is in the first actuation position) induces a friction force on the first and second sliding surface 14, 15 (regardless of whether they are directly in contact with each other or whether they have another component of the clamping device 1 in question interposed therebetween), since it pushes the second connection body 5 (acting against the retention surface 19 of the latter directly or with the interposition of other components of the clamping device 1 in question, as will be better described below and as illustrated in the attached figures) towards the first connection body 3.

In accordance with an embodiment not illustrated in the attached figures, the stem 22 of the first pulling element 16 is placed to traverse the first communication opening 17 of the first connection body 3 substantially fittingly and to traverse the second communication opening 20 of the second connection body 5 with play.

Thereby, the first pulling element 16 is held precisely in position by the first communication opening 17 and the maximum mutual translation on the reference plane X that the first and second connection body 3, 5 can travel one with respect to the other depends on the difference in dimensions (in particular the difference in diameters), on the same reference plane X, between the stem 22 of the first pulling element 16 and the second communication opening 20.

Otherwise, in accordance with the preferential embodiment illustrated in the attached figures, the stem 22 of the first pulling element 16 is placed to traverse the second communication opening 20 of the second connection body 5 substantially fittingly (and, as previously described, to cross the first communication opening 17 with play), so that the first pulling element 16 is integrally joined with the second connection body 5 in translation (in particular with two degrees of freedom) on the reference plane X.

Therefore, in accordance with the preferential embodiment illustrated, the first pulling element 16 is integrally joined in translation with the first actuation piston 7 along the movement direction Z transversal to the reference plane X (in order to pull the second connection body 5 towards the first connection body 3 when the first actuation piston 7 is in the first actuation position) and is placed to traverse the first communication opening 17 with play and the second communication opening 20 substantially fittingly so that the same first pulling element 16 translates together with the second connection body 5 when the latter modifies its first adjustment position with respect to the first connection body 3, translating with two degrees of freedom on the reference plane X.

Preferably, the first pulling element 16 is provided with a base portion 28 and the stem 22 extends between the base portion 28 and the widened head 21.

Furthermore, the first actuation piston 7 is preferably provided with a first containment seat 29, which houses the base portion 28 of the first pulling element 16 in a sliding manner (in particular with two degrees of freedom) on a plane parallel to the reference plane X.

In more detail, the first actuation piston 7 is provided with an access channel 34 communicating with the first containment seat 29, traversed with play by the stem 22 of the first pulling element 16 and having dimensions, on a plane transversal to the movement direction Z, greater than those of the stem 22 and smaller than those of the base portion 28 (so that the stem 22 can translate inside the access channel 34 with two degrees of freedom with respect to the reference plane X, without the base portion 28 being able to traverse the same access channel 34 exiting from the first containment seat 29).

Furthermore, in order to allow the base portion 28 to slide with respect to the first actuation piston 7 with two degrees of freedom on a plane parallel to the reference plane X while maintaining the same first pulling element 16 integrally joined in translation with the first actuation piston 7 along the movement direction Z, the first containment seat 29 has in particular larger dimensions than those of the base portion 28 on a plane transversal to the movement direction Z and has dimensions substantially equal to those of the same base portion 28 on a plane containing the movement direction Z.

Thereby, when the first actuation piston 7 translates along the movement direction Z, the first pulling element 16 necessarily translates together with the first actuation piston 7 along the same movement direction Z or parallel thereto, since the base portion 28 is inserted in a first containment seat 29 having substantially the same dimensions as the base portion 28 on a plane containing the movement direction Z.

In order to allow easy assembly of the clamping device 1 in question, the first pulling element 16 is preferably formed by two components 35, 37, one of which is a screw 35 and the other is a pin with head 37. In more detail, the screw 35 comprises the widened head 21 and a threaded shaft 36 extending from the widened head 21. In particular, the pin with head 37 comprises the stem 22 which is made in a single body with the base portion 28 and extends projecting from the latter up to an end thereof on which a threaded seat 38 is obtained which is engaged by the threaded shaft 36. Even more preferably, the first actuation piston 7 is provided with a passage opening 39 opposite the access channel 34, communicating with the first containment seat 29 and having larger dimensions with respect to those of the base portion 28 on a plane transversal to the movement direction Z.

In particular, the first actuation piston 7 is also provided with a cover 40, which seals the passage opening 39, so that the fluid inserted in the first guide chamber 8 through the first conveyance duct 11 does not enter the first containment seat 29 through the passage opening 39 and does not travel along the access channel 34 and therefore exiting from the first guide chamber 8.

Thereby, to assemble the clamping device 1 in question, the pin with head 37 is mounted on the first actuation piston 7 by passing the stem 22 through the passage opening 39 until the aforesaid stem 22 projects from the access channel 34 and providing the base portion 28 in the first containment seat 29, the cover 40 is positioned to close the passage opening 39, the first elastic means 9 and the first actuation piston 7 carrying assembled the aforesaid pin with head 37 are inserted into the first guide chamber 8 obtained on the first component 3' of the first connection body 3 and the second component 3" is fixed to the first component 3' to close the guide chamber 8 with the stem 22 which traverses the first communication opening 17 obtained on the same second component 3". Afterwards, operationally, the second connection body 5 is arranged (directly or indirectly with other components interposed) on the first connection body 3 so that the stem 22 also traverses the second communication opening 20 and the screw 35 is screwed onto the stem 22, so that the widened head 21 prevents the second connection body 5 from separating from the first connection body 3. Preferably, the first actuation piston 7 comprises a tubular element 41, which extends from the first face 7' facing the second connection body 5, is at least partially inserted substantially fittingly in the first communication opening 17 (in particular, so as to guide as precisely as possible the translation of the same first actuation piston 7 along the movement direction Z between the first and second actuation position) and delimits the access channel 34 traversed with play by the stem 22 of the first pulling element 16 (so that the stem 22 is placed to traverse the first communication opening 17 with play, since such stem 22 is placed to traverse with play the access channel 34 delimited by the aforesaid tubular element 41 at least partially inserted substantially fittingly in the same first communication opening 17).

In particular, the one or more first cup springs of the first elastic means 9 are traversed by the tubular element 41 of the first actuation piston 41.

Advantageously, the second clamping assembly 4 comprises a third connection body 23 rotatably connected to the second connection body 5 around at least one rotation axis (in particular transversal to the movement direction Z and/or to the extension axis Y) such that the third connection body 23 is tiltable with respect to the second connection body 5 between a plurality of second adjustment positions.

Thereby, the clamping device 1 in question can be used to compensate not only for the misalignment between the points in which the clamping device 1 itself is fixed to the support base and to the semifinished product, but also to compensate for any deformations of the semifinished product which lead to a change in the orientation of the point in which the clamping device 1 is fixed to the semifinished product itself. Furthermore, the provision of the third connection body 3 also allows the clamping device 1 to be adapted as a function of the shape and/or orientation of the semifinished product that must be held in position with respect to the support base, since the clamping device 1 provided with the third connection body 23 could be used to hold in position a semifinished product with a substantially planar face facing the support base or to hold in position a semifinished product with a curved surface facing the support base.

In accordance with a preferential embodiment illustrated in the attached figures, the third connection body 23 is advantageously provided with a third sliding surface 24 and the second connection body 5 is provided with a fourth sliding surface 25, such third and fourth sliding surface 24, 25 are arranged in contact with each other and are one concave and the other convex to allow the third connection body 23 to tilt with respect to the second connection body 5 around at least one rotation axis.

Preferably, the third and fourth sliding surface 24, 25 are one concave with the shape of a substantially spherical cap and the other convex with the shape of a substantially spherical cap to allow the third connection body 23 to tilt with respect to the second connection body 5 around three rotation axes mutually orthogonal with each other.

Alternatively, the third and fourth sliding surface 24, 25 can be one concave with the shape of a substantially cylindrical sector and the other convex with the shape of a substantially cylindrical sector to allow the third connection body 23 to tilt with respect to the second connection body 5 with respect to a single rotation axis.

Furthermore, the third connection body 23 is advantageously provided with a second containment seat 26 opening on the third sliding surface 24 towards the second connection body 5 with a third communication opening 27 having smaller dimensions with respect to those of the widened head 21 of the first pulling element 16, on a plane transversal to the movement direction Z.

Furthermore, the widened head 21 of the first pulling element 16 is advantageously housed in the second containment seat 26, the stem 22 of the first pulling element 16 is placed to traverse the third communication opening 27 (in particular the first pulling element 16 is placed to traverse the third communication opening 27 with play, so as to facilitate the rotation of the third connection body 23 with respect to the second connection body 5) and furthermore the fourth sliding surface 25 of the second connection body 5 is at least partially coincident with the retention surface 19.

In more detail, with the first actuation piston 7 in the first actuation position, the widened head 21 is pulled towards the first connection body 3 by the stem 22 to push the third connection body 23 towards the second connection body 5 so that the third sliding surface 24 is pressed into abutment under pressure against the fourth sliding surface 25, thus locking the third connection body 23 and the second connection body 5 in a second adjustment position.

Furthermore, advantageously, with the first actuation piston 7 in the first actuation position, the widened head 21 is pulled towards the first connection body 3 by the stem 22 to also push (in particular through the third connection body 23) the second connection body 5 towards the first connection body 3 so that the second sliding surface 15 is pushed under pressure against the first sliding surface 14, thus locking the second connection body 5 and the first connection body 3 in a first adjustment position (in accordance with the illustrated embodiment in which there are no other components interposed between the first and second sliding surface 14, 15, the second sliding surface 15 is pressed against the first sliding surface 14 when the first actuation piston 7 is in the first actuation position).

In accordance with such preferred embodiment, therefore, with the first actuation piston 7 in the first actuation position, the widened head 21 is pulled towards the first connection body 3 by the stem 22 mechanically connected to the first actuation piston 7 to push, acting on the retention surface 19 through the third connection body 23, the second connection body 5 under pressure with its second sliding surface 15 towards the first sliding surface 14 of the first connection body 3.

Therefore, in accordance with the preferential embodiment illustrated in the attached figures, when the first actuation piston 7 is in the first actuation position, the widened head 21 of the first pulling element 16 is not placed directly in contact with the retention surface 19, but presses thereon through the third connection body 23 and, in particular, through the third sliding surface 24 of the aforesaid third connection body 23, and therefore the retention surface 19 coincides at least in part with the fourth retention surface 25 of the same second connection body 5.

Thereby, in accordance with the embodiment illustrated in the attached figures, the first locking means 6 with first pulling element 16 lock, in the first constraint condition, both the second connection body 5 with respect to the first connection body 3 and the third connection body 23 with respect to the second connection body 5. Furthermore, in accordance with such embodiment, the aforesaid first locking means 6 with first pulling element 16 advantageously allow, in the first release condition, both the second connection body 5 to translate with two degrees of freedom on the reference plane X with respect to the first connection body 3 and the third connection body 23 to tilt around at least one rotation axis with respect to the second connection body 5. Such configuration of the first pulling element 16 (which traverses through the second communication opening 20 of the second connection body 5 and has the widened head 21 thereof inserted in the second containment seat 26 of the third connection body 23) makes the clamping device 1 according to the invention particularly simple and versatile, since the same first locking means 6 can simultaneously allow or inhibit a translation and a rotation of some of the components of the clamping device 1 itself, thus compensating at the same time for any misalignments and tilting of the point at which the clamping device 1 is fixed to the semifinished product with respect to the support base.

However, in accordance with a different embodiment not illustrated, distinct locking means with respect to the first locking means 6 can be provided for the purpose of locking the third connection body 23 in a desired second adjustment position with respect to the second connection body 5.

In this case, for example, the clamping device 1 in question comprises third locking means, which are mechanically associated with the second and third connection body 5, 23 and can be switched between a third constraint condition, in which they lock the second and third connection body 5, 23 in one of the second adjustment positions, and a third release condition, in which they free the second and third connection body 5, 23 to mutually tilt one with respect to the other around at least one rotation axis. Furthermore, the clamping device 1 of such embodiment not illustrated advantageously comprises a third actuation piston, which is slidably inserted into a third guide chamber obtained on one of the second and third connection body 5, 23 to translate between a fifth actuation position, in which it maintains the third locking means in the third constraint condition, and a sixth actuation position, in which it maintains the third locking means in the third release condition. Furthermore, such clamping device 1 also advantageously comprises third elastic means, which are inserted in the third guide chamber and are provided to force the third actuation piston into one of the fifth actuation position and the sixth actuation position, and third actuator means, which are provided to move the third actuation piston into the other between the fifth and sixth actuation positions by making the third elastic means yield elastically (for example, the third actuator means comprise a second conveyance duct obtained on the one of the second and third connection body 5, 23 on which the third guide chamber is obtained, placed in fluid communication with the aforesaid third guide chamber and provided to convey a pressurized fluid against the third actuation piston to make the third elastic means yield elastically and push the third actuation piston into the other of the fifth actuation position and the sixth actuation position).

In accordance with such embodiment not illustrated, provided with the third locking means, the second connection body 5 is internally provided with a third containment seat at least partially delimited by the retention surface 19 and containing therein the widened head 21 of the first pulling element 16, which is susceptible of directly abutting against the aforesaid retention surface 19 with the first actuation piston 7 in the first actuation position (and therefore in this case the aforesaid retention surface 19 does not coincide with the fourth sliding surface 25 of the second connection body 5 on which the third sliding surface 24 of the third connection body 23 is susceptible of sliding).

Furthermore, the aforesaid third containment seat (which is obtained inside the second connection body 5, is at least partially delimited by the retention surface 19 and contains the widened head 21) is also advantageously provided in further embodiments not illustrated in which the third connection body 23 is not present (even in this case the widened head 21 is susceptible of directly abutting against the retention surface 19, with the first actuation piston 7 in the first actuation position).

In accordance with the embodiment illustrated in the attached figures, the first clamping assembly 2 advantageously comprises a fourth connection body 42 and, furthermore, the first connection body 3 and the fourth connection body 42 are slidably associated along a translation direction W to move one with respect to the other in a plurality of third adjustment positions.

Preferably, the translation direction W is transversal to the reference plane X and, even more preferably, orthogonal to the aforesaid reference plane X (and, therefore, is in particular also coincident or parallel to the movement direction Z).

In more detail, the fact that the first and fourth connection body 3, 42 are advantageously slidably associated along the translation direction W means that the clamping device 1 in question can be used to clamp semifinished products to the support base having a clamping surface (facing the support base) with non-uniform dimensional tolerances, which lead to different distances from the support base itself at the different points where the clamping devices 1 will be clamped to the semifinished product.

Furthermore, the provision of the fourth connection body 42 sliding with respect to the first connection body 3 along a translation direction W transversal (and in particular orthogonal) to the reference plane X allows the clamping device 1 to adapt to the semifinished product even when (due to thermal deformations or similar induced by the machining operations) the point at which the clamping device 1 is fixed to the semifinished product has changed the height thereof with respect to the support base.

Furthermore, the clamping device 1 in question advantageously comprises second locking means 46, which are mechanically associated with the first and fourth connection body 3, 42 and can be switched between a second constraint condition, in which they lock the first and fourth connection body 3, 42 in one of the third adjustment positions, and a second release condition, in which they free the first and fourth connection body 3, 42 to mutually translate one with respect to the other along the translation direction W.

Furthermore, the clamping device 1 in question advantageously comprises a second actuation piston 47, which is slidably inserted in the first guide chamber 8 obtained on the first connection body 3 to translate between a third actuation position, in which it maintains the second locking means 46 in the second constraint condition, and a fourth actuation position, in which it maintains the second locking means 46 in the second release condition.

The clamping device 1 advantageously also comprises second elastic means 48, which are inserted in the first guide chamber 8 and are provided to force the second actuation piston 47 into one of the third actuation position and the fourth actuation position, and furthermore the first actuator means 10 are preferably provided to move the second actuation piston 47 into the other of the third and fourth actuation position by making the second elastic means 48 yield elastically (as well as to move the first actuation piston 7 into the other of the first and the second actuation position by making the first elastic means 9 yield elastically).

In more detail, the provision of the second actuation piston 47 and the second elastic means 48 in the same first guide chamber 8 in which the first actuation piston 7 and the first elastic means 9 are arranged allows for the fourth connection body 42 to increase the degrees of freedom useful for compensating the stresses induced by the machining operations, keeping the clamping device 1 in question as compact as possible, thus avoiding the provision of further actuator means (separate from the first actuator means 10) and of a further guide chamber obtained in the first connection body 3 or in the fourth connection body 42 and adapted to contain the second actuation piston 47 and the second elastic means 48.

Preferably, the second actuation piston 47 is interposed between the first actuation piston 7 and the second end surface 8".

Furthermore, the first conveyance duct 11 of the first actuator means 10 is placed in fluid connection with the first guide chamber 8 and is in particular provided to convey a pressurized fluid both against the first actuation piston 7 to make the first elastic means 9 yield elastically and push the same first actuation piston 7 into the other of the first and second actuation position (that is, in other words, other with respect to the position in which the same first actuation piston 7 is forced by the first elastic means 9), and against the second actuation piston 47 to make the second elastic means 47 yield elastically and push the second actuation piston 47 into the other of the third and fourth actuation position (that is, in other words, other with respect to the position in which the same second actuation piston 47 is forced by the second elastic means 48).

In more detail, in this case, the aforesaid first conveyance duct 11 extends between a receiving opening, which is arranged on an external side surface 33 of the first connection body 3 (in particular an external side surface 33 of the first component 3'), and a conveyance opening, which is placed in fluid connection with the first guide chamber 8, in particular obtained on the internal side surface 8‴ in a position interposed between the first and second actuation piston 7, 48. Thereby, by introducing a pressurized fluid into the first conveyance duct 11, the latter is able to move both the first and the second actuation piston 7, 47 at the same time.

Advantageously (similarly to the first elastic means 9 and the first actuator means 10), the second elastic means 48 are provided to force the second actuation piston 47 into the third actuation position and the first actuator means 10 are provided to move the second actuation piston 47 into the fourth actuation position by making the second elastic means 48 yield elastically.

Furthermore, similarly to the first elastic means 9, the second elastic means 48 preferably comprise at least one third cup spring and, in particular, more than one third cup spring arranged one above the other.

In order to allow the first and fourth connection body 3, 42 to slide one with respect to the other, the fourth connection body 42 is advantageously provided with a guide seat 43 internally delimited at least partially by a first side surface 44 and the first connection body 3 is at least partially inserted into the guide seat 43 in a sliding manner along the translation direction W.

Furthermore, the first connection body 3 is advantageously provided with a locking portion 45 contained in the guide seat 43 and deformable between an expanded configuration, in which it exerts pressure against the first side surface 44 to prevent the first connection body 3 from sliding in the guide seat 43, and an undeformed configuration, in which it does not exert pressure against the first side surface 44 allowing the first connection body 3 to slide in the guide seat 43.

Thereby, when the locking portion 45 is in the expanded configuration, the first and fourth connection body 3, 42 are prevented from sliding one with respect to the other along the translation direction W by the friction force exerted by the locking portion 45 itself against the first side surface 44 of the guide seat 43 of the second connection body 42.

In more detail, therefore, the second locking means 46 are provided to maintain the locking portion 45 of the first adjustment body 3 in the expanded configuration when they are in the second constraint condition and are provided to maintain the locking portion 45 in the undeformed configuration when they are in the second release condition.

Advantageously, in order to allow the locking portion 45 to pass between the expanded configuration and the undeformed configuration as easily as possible, the aforesaid locking portion 45 of the first connection body 3 comprises a plurality of flexible fins 49 extending substantially parallel to the translation direction W.

In more detail, the flexible fins 49 (extending substantially parallel to the translation direction W) are foldable around axes transversal to the aforesaid translation direction W, so that, in the expanded configuration, the aforesaid folded flexible fins 49 increase the size, on a plane transverse to the translation direction W itself, of the locking portion 45, thus causing the latter to interfere with the first side surface 44.

Advantageously, a containment volume 50 is obtained in the locking portion 45, which is internally delimited at least partially by a second side surface 51.

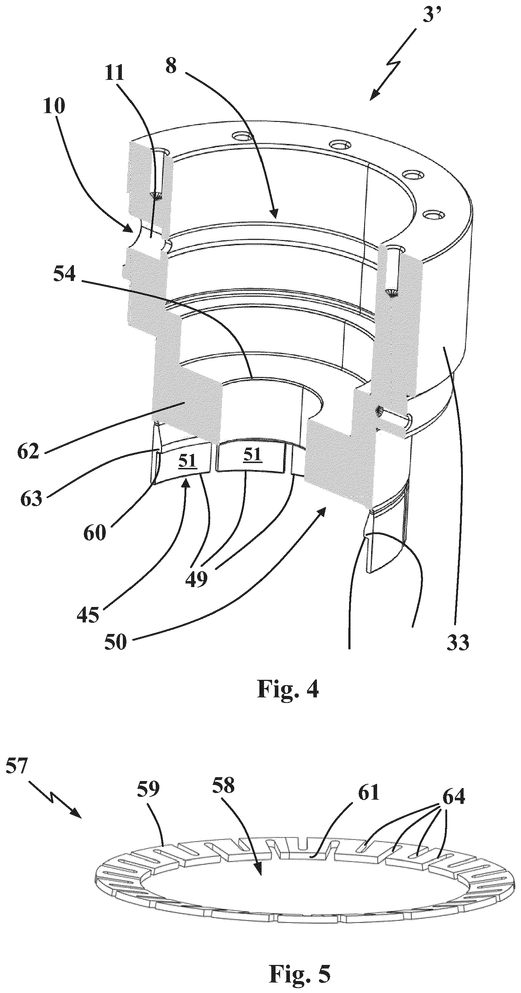

As visible in the attached figure 4, the aforesaid containment volume 50 is preferably delimited by the flexible fins 49, on which the second side surface 51 extends.

Furthermore, the second locking means 46 advantageously comprise a pusher body 52, which is slidably inserted into the containment volume 50, is integrally joined at least in translation with the second actuation piston 47 and comprises a pushing surface 53 adapted to interfere, directly or indirectly, with the second side surface 51 to push the locking portion 45 into the expanded configuration when the second actuation piston 47 is in the third actuation position.

In more detail, in order to allow the pusher body 52 to be integrally joined at least in translation with the second actuation piston 47, the first connection body 3 is provided with at least a fourth communication opening 54 placed to connect the first guide chamber 8 and the containment volume 50 and, furthermore, the second actuation piston 47 and the pusher body 52 are mechanically connected to each other through the aforesaid fourth communication opening 54.

In particular, the second actuation piston 47 comprises a connecting rod 55 positioned across the fourth communication opening 54, extending at least in part inside the containment volume 50 and fixed (for example by screwing, interlocking or similar) to the pusher body 52.

In accordance with an embodiment variant not illustrated in the attached figures, the second side surface 51 is tapered and the pushing surface 53 of the pusher body 52 is shaped so that, when the second actuation piston 47 is in the third actuation position, it interferes with the second side surface 51 to bring the locking portion 45 into the expanded configuration, and that, when the second actuation piston 47 is in the fourth actuation position, it does not interfere with the second side surface 51 to leave the locking portion 45 in the undeformed configuration.

Alternatively, in accordance with the illustrated embodiment, the second locking means 46 advantageously comprise fourth elastic means 56, which are arranged in the containment volume 50, are opposite the second side surface 51, and are susceptible of interfering, directly or indirectly, with the pushing surface 53 of the pusher body 52.

In more detail, such fourth elastic means 56 can be operated by the aforesaid pusher body 52 between a release configuration and a compression configuration.

In particular, when the second actuation piston 47 is in the fourth actuation position, the release configuration occurs, in which the fourth elastic means 56 are provided with a first radial bulk and a first axial bulk so as not to interfere with the second side surface 51.

Furthermore, in particular, when the second actuation piston 47 is in the third actuation position, the compression configuration occurs, in which the fourth elastic means 56 are provided with a second radial dimension greater than the first radial dimension and a second axial dimension less than the first axial dimension to interfere with the second side surface 51 and push the locking portion 45 into the expanded configuration.

In accordance with the preferred embodiment, therefore, when the second actuation piston 47 is in the third actuation position, the pushing surface 53 of the pusher body 52 preferably does not interfere directly with the second side surface 51, but rather interferes with the aforesaid second side surface 51 through the fourth elastic means 56.

Advantageously, the fourth elastic means 56 comprise at least one second cup spring 57 and, preferably, comprise a plurality of second cup springs 57 arranged one above the other.

In more detail, the at least one second cup spring 57 extends with an annular shape around its an extension axis thereof which is substantially parallel to the translation direction W and delimits a central opening 58 traversed by the pusher body 52.

Furthermore, such at least one second cup spring 57 is advantageously provided with a larger base 59 thereof, which is arranged, directly or indirectly, to rest against an abutment surface 60 extending within the containment volume 50 transversally to the second side surface 51 and is in contact with the second side surface 51.

Furthermore, the aforesaid at least one second cup spring 57 is advantageously provided with a smaller base 61, which is opposite the larger base 59 and is susceptible of receiving, directly or indirectly, against itself the pushing surface 53 of the pusher body 52 to be actuated between the compression configuration and the release configuration.

In particular, in the case in which several second cup springs 57 are provided, only one of them is provided with the larger base 59 thereof placed directly resting against the abutment surface 60 and only one of them is provided with the smaller base 61 thereof susceptible of receiving the pushing surface 53 directly against itself.

Advantageously, the first connection body 3 is provided with a dividing wall 62 interposed between the first guide chamber 8 (in particular, the second end surface 8" of the first guide chamber 8 extends onto the dividing wall 62) and the containment volume 50, on which dividing wall 62 the fourth communication opening 54 is preferably obtained.

In accordance with a variant embodiment not illustrated, the abutment surface 60 can extend onto the dividing wall 62 on the side of the containment volume 50.

Alternatively, in accordance with a further embodiment not illustrated, the abutment surface 60 is advantageously defined by a support ring arranged against the dividing wall 62 and in particular housed in the containment volume 50.

Still differently, in accordance with the illustrated embodiment, each flexible fin 49 is provided in a single body with a retention step 63 and, furthermore, on each of such retention steps 63 extends a part of the abutment surface 60 facing in the opposite direction with respect to the dividing wall 62. Preferably, in order for the second elastic means 48 to advantageously maintain the second actuation piston 47 in the third actuation position, the second elastic means 48 are interposed between the second actuation piston 47 and the dividing wall 62 and, furthermore, the fourth elastic means 56 are interposed between the abutment surface 60 and the pushing surface 53 of the pusher body 52, which pushing surface 53 is in particular facing the dividing wall 62.

Furthermore, in accordance with the illustrated embodiment, in order for the second elastic means 48 to advantageously maintain the second actuation piston 47 in the third actuation position, the fourth elastic means 56 are preferably provided with a lower rigidity with respect to that of the second elastic means 48.

Preferably, as visible in Figure 5, in order to confer a low rigidity to the fourth elastic means 56 (in particular a lower rigidity with respect to that of the second elastic means 48), the at least one second cup spring 57 is provided with a plurality of weakening grooves 64, which in particular extend one starting from the smaller base 61 and one starting from the larger base 59 in an alternate manner for the entire circumferential extension of the second cup spring 57 around the extension axis.

Thereby, the second elastic means 48 tend to keep the second actuation piston 47 away from the dividing wall 62, so that the pusher body 52 is kept close to the abutment surface 60 and maintains, through its pushing surface 53, the fourth elastic means 56 in the compression configuration, thus causing the latter to assume the second radial bulk and consequently interfere with the second side surface 51, bringing the locking portion 45 into the expanded configuration.

Without departing from the scope of protection of the present patent, in accordance with further embodiments not illustrated, the second actuation piston 47 and the second elastic means 48 could not be inserted into the first guide chamber 8 of the first connection body 3, but could instead be inserted into a separate second guide chamber obtained on one of the first connection body 3 and the fourth connection body 42. In this case, the clamping device 1 in question advantageously comprises second actuator means (distinct with respect to the first actuator means 10) provided to move the second actuation piston 47 into one of the third and fourth actuation position by making the second elastic means 48 yield elastically. Furthermore, in this case having the second actuation piston 47 and the second elastic means 48 arranged in the second guide chamber distinct with respect to the first guide chamber 8, the guide seat 43 is obtained on the one of the first and the fourth connection body 3, 42 on which the second guide chamber is not obtained and the locking portion 45 is obtained on the one of the first and the fourth connection body 3, 42 on which the aforesaid second guide chamber is obtained.

In accordance with the preferential embodiment provided with the fourth connection body 42, the first support surface 12 extends on the fourth connection body 42 and the first coupling means 30 advantageously comprise at least a first tie rod (not illustrated), which is provided with a first shaped head insertable in a first coupling seat 65 obtained on the fourth connection body 42 starting from the first support surface 12 and with a first threaded stem extending starting from the aforesaid first shaped head and intended to be screwed to the support base or to the semifinished product, and two first jaws 66, which are slidably inserted in a first guide channel 67 obtained on the fourth connection body 42 to intercept the first coupling seat 65 and can be switched, by means of a first screw-nut mechanism 68, between a first coupling configuration, in which they are closed against the first shaped head housed in the first coupling seat 65, and a first release configuration, in which they are spaced from the first shaped head.

Furthermore, in accordance with the preferential embodiment provided with the third connection body 23, the second support surface 13 extends onto the third connection body 23 and the second coupling means 31 advantageously comprise at least one second tie rod (not illustrated), which is provided with a second shaped head insertable into a second coupling seat 69 obtained on the third connection body 23 starting from the second support surface 13 and with a second threaded stem extending starting from the aforesaid second shaped head and intended to be screwed onto the support base or the semifinished product, and two second jaws 70, which are slidably inserted into a second guide channel 71 obtained on the third connection body 23 to intercept the second coupling seat 69 and can be switched, by means of a second screw-nut mechanism 72, between a second coupling configuration, in which they are closed against the second shaped head housed in the second coupling seat 69, and a second release configuration, in which they are spaced from the second shaped head.

In more detail, in accordance with such embodiment provided with the third and fourth connection body 23, 42, the first support surface 12 obtained on the fourth connection body 42 is parallel to the reference plane X and the first clamping assembly 2 is intended to be fixed to the support base with the first support surface 12 arranged on such support base.

In accordance with other possible embodiments not illustrated in which the fourth connection body 42 is not provided, the first support surface 12 extends onto the first connection body 3, the first coupling seat 65 is obtained on the first connection body 3 starting from the first support surface 12 and the first guide channel 67 is obtained on the first connection body 3 to intercept the first coupling seat 65.

Furthermore, in accordance with other possible embodiments not illustrated in which the third connection body 23 is not provided, the second support surface 13 extends onto the second connection body 5, the second coupling seat 69 is obtained on the second connection body 5 starting from the second support surface 13 and the second guide channel 71 is obtained on the second connection body 5 to intercept the second coupling seat 69.

Therefore, the invention thus conceived achieves the pre-set objects.

## Claims

1. Clamping device (1) for holding a semifinished product in position with respect to a support base, which comprises:
- at least one first clamping assembly (2), which is intended to be removably fixed to one of said support base and said semifinished product and it comprises at least one first connection body (3);
- at least one second clamping assembly (4), which is intended to be removably fixed to the other of said semifinished product and said support base and it comprises at least one second connection body (5); said first and second connection body (3, 5) being mechanically engaged to mutually translate one with respect to the other with at least one degree of freedom on a first reference plane (X) between a plurality of first adjustment positions;
- first locking means (6), which are mechanically associated with said first and with said second connection body (3, 5) and they can be switched between a first constraint condition, in which they lock said first and second connection body (3, 5) into one of said first adjustment positions, and a first release condition, in which they free said first and second connection body (3, 5) to mutually translate one with respect to the other on said reference plane (X);
- a first actuation piston (7), which is slidably inserted into a first guide chamber (8) obtained on said first connection body (3) in order to translate along a movement direction (Z) transversal to said reference plane (X) between a first actuation position, in which it maintains said first locking means (6) in said first constraint condition, and a second actuation position, in which it maintains said first locking means (6) in said first release condition;
- first elastic means (9), which are inserted into said first guide chamber (8) and they are provided to force said first actuation piston (7) into one of said first actuation position and said second actuation position;
- first actuator means (10), which are provided to move said first actuation piston (7) into the other of said first and second actuation position, making said first elastic means (9) yield elastically.

2. Clamping device (1) according to claim 1, **characterized in that** said first actuator means (10) comprise at least one first conveyance duct (11) obtained on said first connection body (3), placed in fluid communication with said first guide chamber (8) and provided to convey a pressurized fluid against said first actuation piston (7) in order to make said first elastic means (9) yield elastically and push said first actuation piston (7) into the other of said first actuation position and said second actuation position.

3. Clamping device (1) according to claim 1 or 2, **characterized in that** said first clamping assembly (2) is provided with a first support surface (12) intended to be placed against one of said support base and said semifinished product and said second clamping assembly (4) is provided with a second support surface (13) intended to be placed against the other of said support base and said semifinished product;
at least one between said first support surface (12) and said second support surface (13) being parallel to said reference plane (X).

4. Clamping device (1) according to any one of the preceding claims, **characterized in that** said first connection body (3) is provided with a first sliding surface (14) and said second connection body (5) is provided with a second sliding surface (15), and such first and second sliding surface (14, 15) are susceptible of sliding one with respect to the other with said first and second connection body (3, 5) translating on said reference plane (X);
said first locking means (6) comprising a first pulling element (16), which is mechanically associated with said second connection body (5) and is integrally joined with said first actuation piston (7) at least in translation along said movement direction (Z) transverse to said reference plane (X), to pull under pressure said second sliding surface (15) towards said first sliding surface (14) locking said first and second connection body (3, 5) in one said first adjustment position, with said first actuation piston (7) in said first actuation position.

5. Clamping device (1) according to any one of the preceding claims, **characterized in that** said first connection body (3) is provided with a first communication opening (17) extending between said first guide chamber (8) and said first sliding surface (14);
said first pulling element (16) being placed to traverse, with play, the first communication opening (17) of said first connection body (3).

6. Clamping device (1) according to claim 4 or 5, **characterized in that** said second connection body (5) is provided with a retention surface (19), which is faced in the opposite direction with respect to the second sliding surface (15), and with a second communication opening (20) extending between said second sliding surface (15) and said retention surface (19);
said first pulling element (16) being provided with:
- a widened head (21), which is placed adjacent to said retention surface (19) and has dimensions, on a plane transverse to said movement direction (Z), greater than those of said second communication opening (20);
- a stem (22), which extends starting from said widened head (21), is mechanically connected to said first actuation piston (7) and is placed to traverse the second communication opening (20) of said second connection body (5);
with said first actuation piston (7) in said first actuation position, said widened head (21) being pulled towards said first connection body (3) by said stem (22) mechanically connected to said first actuation piston (7), to push under pressure, by acting on said retention surface (19), said second connection body (5) with its second sliding surface (15) towards the first sliding surface (14) of said first connection body (3).

7. Clamping device (1) according to claim 5 and 6, **characterized in that** the stem (22) of said first pulling element (16) is placed to traverse substantially fittingly the second communication opening (20) of said second connection body (5) so that said first pulling element (16) is integrally joined with said second connection body (5) in translation on said reference plane (X).

8. Clamping device (1) according to claim 7, **characterized in that** said first pulling element (16) is provided with a base portion (28) and said stem (22) extends between said base portion (28) and said widened head (21);
said first actuation piston (7) being provided with a first containment seat (29), which houses the base portion (28) of said first pulling element (16) in a sliding manner on a plane parallel to said reference plane (X).

9. Clamping device (1) according to any one of the preceding claims, **characterized in that** said second clamping assembly (4) comprises a third connection body (23) rotatably connected to said second connection body (5) around at least one rotation axis so that said third connection body (23) is tiltable with respect to said second connection body (5) between a plurality of second adjustment positions.

10. Clamping device (1) according to claim 6 and 9, **characterized in that** said third connection body (23) is provided with a third sliding surface (24) and said second connection body (5) is provided with a fourth sliding surface (25), and such third and fourth sliding surface (24, 25) are arranged in contact with each other and are one concave and the other convex to allow said third connection body (23) to tilt with respect to said second connection body (5) around at least one rotation axis; said third connection body (23) being provided with a second containment seat (26) opening on said third sliding surface (24) towards said second connection body (5) with a third communication opening (27) having dimensions smaller with respect to those of the widened head (21) of said first pulling element (16), on a plane transverse to said movement direction (Z);
the widened head (21) of said first pulling element (16) being housed in said second containment seat (26), the stem (22) of said first pulling element (16) being placed to traverse said third communication opening (27) and said fourth sliding surface (25) being at least in part coincident with said retention surface (19);
with said first actuation piston (7) in said first actuation position, said widened head (21) being pulled towards said first connection body (23) by said stem (22) in order to push:
- said third connection body (23) towards said second connection body (5) so that said third sliding surface (24) is pushed in abutment under pressure against said fourth sliding surface (25), locking said third connection body (23) and said second connection body (5) in one said second adjustment position; and
- said second connection body (5) towards said first connection body (3) so that said second sliding surface (15) is pushed under pressure towards said first sliding surface (14), locking said second connection body (5) and said first connection body (3) in one said first adjustment position.
